# EUROPEAN PATENT APPLICATION

(11) **EP 2 538 117 A1**
(43) Date of publication of application: **26.12.2012**
(21) Application number: 12173171.5
(22) Date of filing: 22.06.2012
(51) Int. Cl.: F16H 55/22, F16H 57/00, F16H 57/033, F16H 57/031, F16H 57/039, E05F 15/16

(54) **Electric gear motor particularly for power window actuators and other applications**

(30) Priority: 24.06.2011 IT PD20110213
(71) Applicant: UNUS International S.p.A., 30030 Pianiga, Frazione Rivale (VE) (IT)
(72) Inventor: Melato, Massimo, 35027 Noventa Padovana PD (IT)
(74) Representative: Modiano, Micaela Nadia

(57) **Abstract**

An electric gear motor (10) particularly for power window actuators and other similar applications, of the type comprising an electric motor (11) to the casing (12) of which a gear holder housing (13) is fixed, the end portion of the rotating shaft of the electric motor (11) meshing with torque transmission means (14) which are adapted to transfer the rotation from a first axis (X1), i.e., the axis of the rotating shaft, to a second axis (X2), which is perpendicular to a plane that comprises the first axis (X1), the torque transmission means (14) being accommodated in the housing (13).

The housing (13) and the torque transmission means (14) are shaped so that the torque transmission means (14) can be mounted in the housing (13), selectively, according to either a first type of assembly, intended to allow the transmission of torque on a first side (15) of the housing (13), or a second type of assembly, intended to allow the transmission of torque on the opposite, second side (16) of the housing (13).

## Description

The present invention relates to an electric gear motor particularly for power window actuators and other applications.

Nowadays the electric gear motors used in cars, for example for moving power window actuators, windscreen wipers, seats and other, similar applications, generally comprise an electric motor to the casing of which a gear holder housing is fixed, with the end portion of the rotating shaft of the electric motor meshing with torque transmission means which are adapted to transfer the rotation from a first axis, i.e. the axis of the rotating shaft, to another axis which is perpendicular to a plane comprising the axis of the drive shaft, with the torque transmission means being accommodated in the housing.

Such electric gear motors, which are very small in size, are generally provided in two versions, substantially mirror-symmetrical, for application on opposite sides of a same vehicle.

A first type of a same electric gear motor thus has the torque transmission means, for example a shaft, a pinion, or other gear, available on a first side of the gear holder housing, while a mirror-symmetrical second type of the same reduction gear has the torque transmission means available in the opposite direction of a same orientation.

This implies that the same gear motor must have a certain number of components which are shaped so that the torque is transmitted for example from a first side of the housing, and an identical number of equivalent components which are shaped so that the torque is transmitted from the opposite side of the housing.

Thus, for example, the housing of a gear motor must be provided both in a 'right-hand' version and in a mirror-symmetric 'left-hand' version.

This means that for each gear motor that must offer a mirror-symmetrical model of itself, double the female mold parts are required as well as double the storage space per part for the components.

The aim of the present invention is to provide an electric gear motor particularly for power window actuators and other applications, which is capable of overcoming the above mentioned drawbacks of conventional electric gear motors.

Within this aim, an object of the invention is to provide an electric gear motor that is simple and cheap to make both with transmission of the torque on a first side, and with transmission of the torque on the opposite side.

Another object of the invention is to provide an electric gear motor with efficiency and performance levels not lower than conventional gear motors.

Another object of the invention is to provide a gear motor that makes it possible to lower the production costs and the storage costs.

Another object of the invention is to provide an electric gear motor particularly for power window actuators and other applications, that can be made using known systems and technologies.

This aim and these and other objects which will become better apparent hereinafter are achieved by an electric gear motor particularly for power window actuators and other similar applications, of the type comprising an electric motor to the casing of which a gear holder housing is fixed, the end portion of the rotating shaft of said electric motor meshing with torque transmission means which are adapted to transfer the rotation from a first axis, i.e., the axis of said rotating shaft, to a second axis, which is perpendicular to a plane that comprises said first axis, said torque transmission means being accommodated in said housing, said electric gear motor being **characterized in that** said housing and said torque transmission means are shaped so that said torque transmission means can be mounted in said housing, selectively, according to either a first type of assembly, intended to allow the transmission of torque on a first side of the housing, or a second type of assembly, intended to allow the transmission of torque on the opposite, second side of the housing.

Further characteristics and advantages of the invention will become better apparent from the description of two preferred, but not exclusive, embodiments of the electric gear motor according to the invention, which are illustrated by way of non-limiting example in the accompanying drawings, wherein:
Figure 1 is a perspective view of a gear motor according to the invention in a first embodiment thereof;
Figure 2 is an exploded perspective view of the gear motor in Figure 1;
Figure 3 is a partially exploded sectional side view of the gear motor in the previous figures;
Figure 4 is the same side view as Figure 3 with the gear motor assembled according to a first mode of assembly;
Figure 5 is a different partially exploded sectional side view of the gear motor according to the invention in the first embodiment thereof;
Figure 6 is a perspective view of a gear motor according to the invention in a second embodiment thereof;

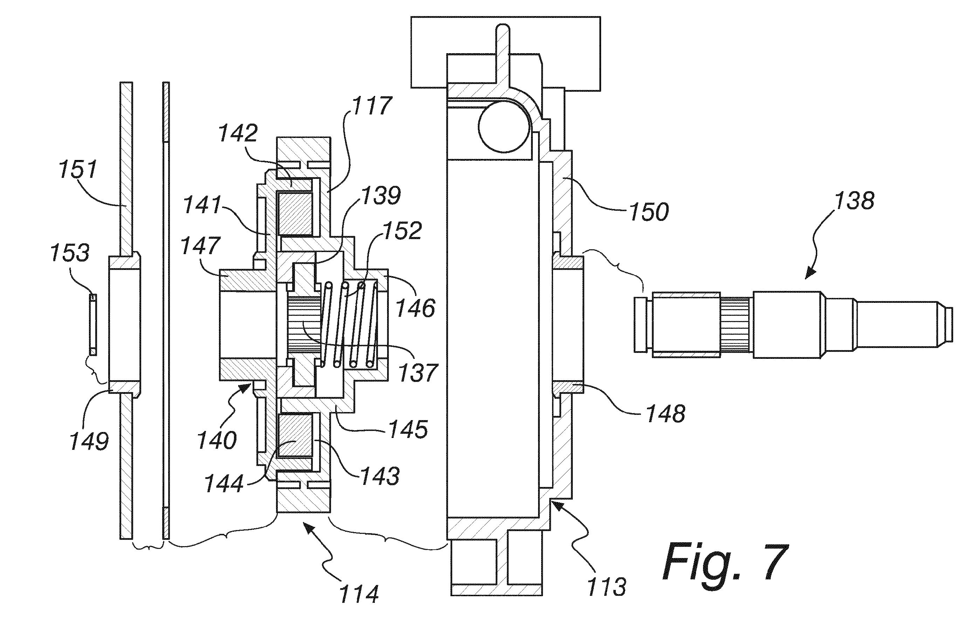

Figure 7 is a partially exploded sectional side view of the gear motor in Figure 6,
Figure 8 is the same side view as Figure 7 with the gear motor assembled according to a first mode of assembly;
Figure 9 is the same side view as Figure 7 with the gear motor assembled according to a second mode of assembly.

With reference to the figures, an electric gear motor according to the invention, particularly for power window actuators and other similar applications, is generally designated, in a first embodiment, with the reference numeral 10.

The gear motor 10 comprises an electric motor 11 to the casing 12 of which a gear holder housing 13 is fixed.

The end portion of the rotating shaft, not shown for the sake of simplicity, of the electric motor 11 meshes with torque transmission means 14 which are adapted to transfer the rotation from a first axis X1, i.e. the axis of the rotating shaft, to a second axis X2, which is perpendicular to a plane comprising the first axis X1; the torque transmission means 14 are accommodated in the housing 13.

The peculiarity of the electric gear motor 10 according to the invention resides in that the housing 13 and the torque transmission means 14 are shaped so that the torque transmission means 14 can be mounted in the housing 13, selectively, according to either a first type of assembly, intended to allow the transmission of torque on a first side 15 of the housing 13, or a second type of assembly, intended to allow the transmission of torque on the opposite, second side 16 of the housing 13.

In such first embodiment thereof, for example, the torque transmission means 14 comprise, inside the housing 13, a driven gear 17 which is supported perimetrically by two opposite sliding collars 18 and 19 respectively.

A first collar 18 is interposed between a first face of the perimetric portion 20 of the driven gear 17 and the edge 21 of a first axial opening 22 on the housing 13, such first opening 22 being adapted to allow access to the central portion 23 of the driven gear 17 for the assembly of further elements of a drive of which the gear motor 10 is part.

The second sliding collar 19 is interposed between the opposite second face of the perimetric portion 20 of the driven gear 17 and the edge 24 of a second axial opening 25, which is opposite to the first one 22, and is defined on a cover 26 of the housing 13; the cover 26 is for containing the driven gear 17.

Between the cover 26 and the housing 13, a flat annular gasket seal 26a is interposed.

The cover 26 is fixed to the housing 13 by way of screws 26b.

The transmission means 14 of such first embodiment of the invention also comprise a flange 27 which supports a supporting shaft 28 for the driven gear 17, the latter being provided with a corresponding central through hole 17a.

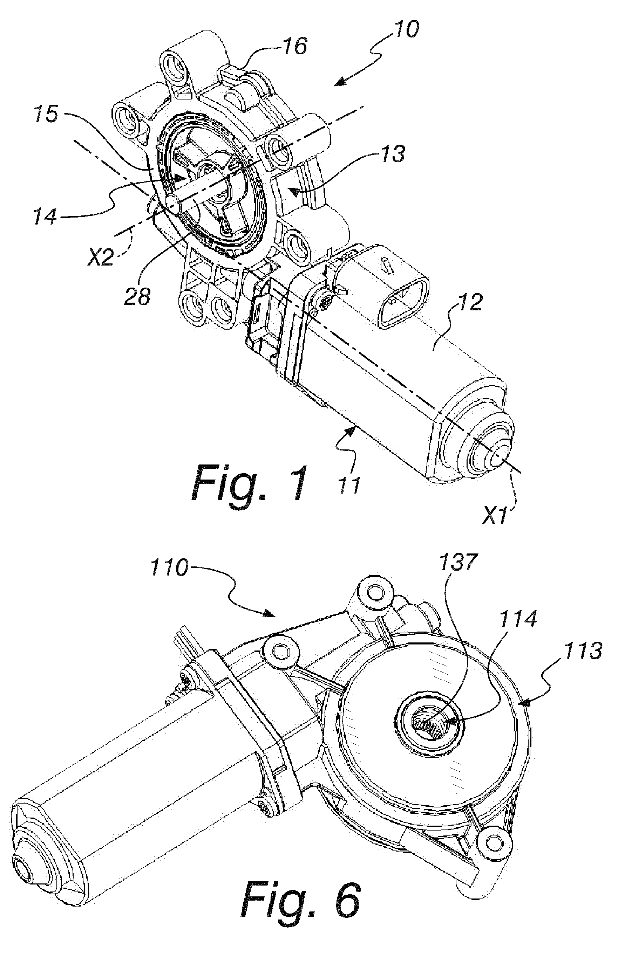

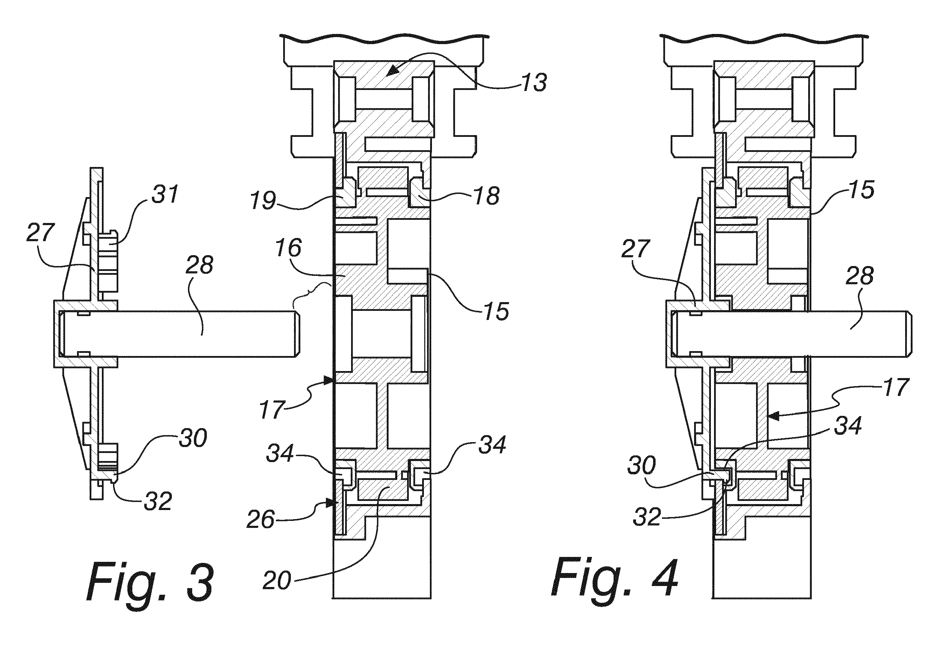

The supporting shaft 28 arranges itself so as to pass axially through the driven gear 17 and protrudes from it by such a length as to also support a component of a drive of a power window actuator or the like, as shown in Figures 1 and 4.

The flange 27 is fixable with quick fixing means to either one of the edges 21 and 24 of the openings respectively 22 and 25 of the housing 13.

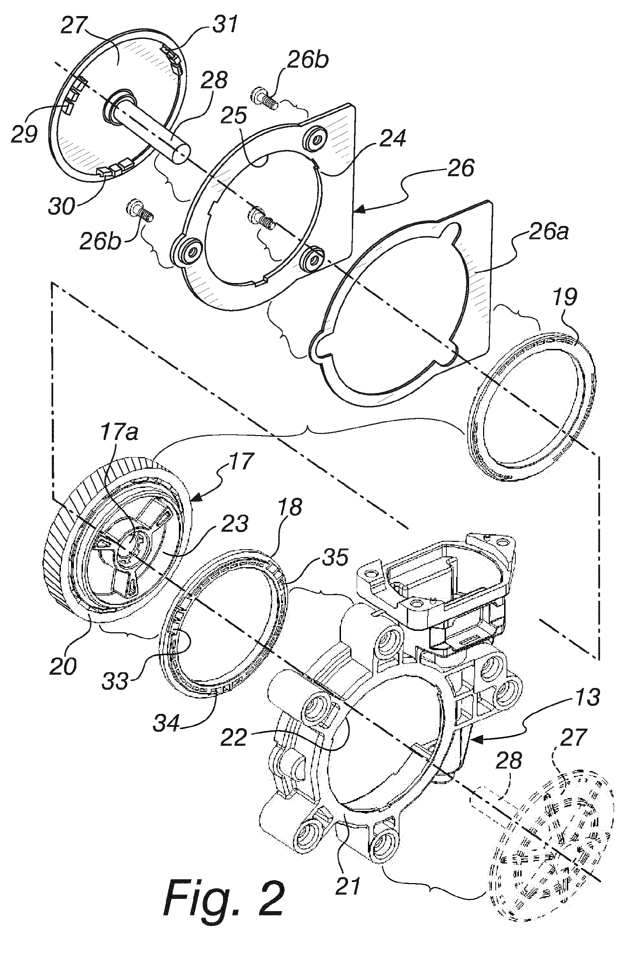

In such embodiment, the quick fixing means are constituted by a series of spaced snap-acting interlocking tabs, 29, 30, 31 in Figure 2, which are elastically flexible and are provided with corresponding teeth, 32 in Figures 3 and 4, which are adapted to engage in undercut with respect to the edges 21 and 24, either of the first opening 22 on the housing 13, or of the second opening 25 on the cover 26.

The sliding collars 18 and 19 are the same as each other and are made of plastic material, and they can also be provided in other materials that are similar and equivalent.

The sliding collars 18 and 19 are provided with receptacles 33, 34, 35 respectively, for accommodating the interlocking tabs 29, 30, 31; such receptacles can clearly be seen in Figure 2 and in the sections in Figures 3 and 4.

In such embodiment, the flange 27 is provided by molding plastic material and in particular is overmolded onto an end of the supporting shaft 28.

Figure 3 is a sectional and partially exploded side view of the gear motor 10, in which the gear 17 is mounted in the housing 13 between the two sliding collars 18 and 19, and closed therein by the cover 26, with the flange 27 which supports the supporting shaft 28 shown separated.

In Figure 4 the flange 27 is fixed to the second side 16 of the housing 13, so that the supporting shaft 28 protrudes from the first side 15.

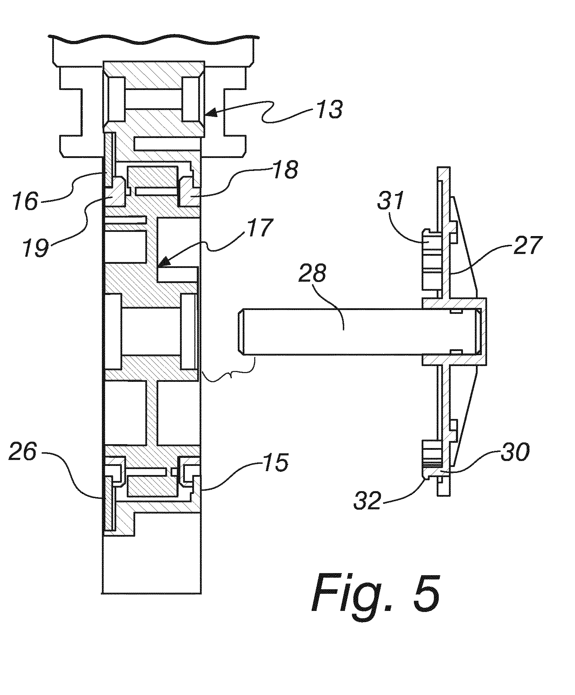

In Figure 5 the flange 27 is arranged to be fixed to the housing 13 on the first side 15, so that the supporting shaft 28 will protrude from the second side 16.

A second embodiment of an electric gear motor according to the invention is generally shown in Figure 6.

In such second embodiment, which is also intended to be by way of non-limiting example of the invention, the torque transmission means 114 comprise, inside the housing 113, a driven gear 117 which supports an internally toothed ring 137 for mating in an axial direction with a torque transmission shaft 138.

The internally toothed ring 137 is mounted in a corresponding seat 139 defined on a sleeve 140 which is partially inserted in the gear 117 and is coupled thereto by a flange thereof 141 which is provided with protrusions 142 which are contoured to be inserted in corresponding seats 143 which are defined on the gear 117, with the interposition of an annular body 144 for cushioning stresses in a tangential direction between the gear 117 and the flange 141 of the sleeve 140.

The central portion 145 of the gear 117 and the sleeve 140 extend along the same orientation but in opposite directions so as to define a corresponding pivoting cuff, respectively 146 and 147.

The two pivoting cuffs 146 and 147 have the same outside diameter and are intended to rotate inside corresponding identical collars 148 and 149.

A first collar 148 is inserted in the bottom 150 of the housing 113, and the second, opposite collar 149 is incorporated in a cover 151 for closing the housing 113.

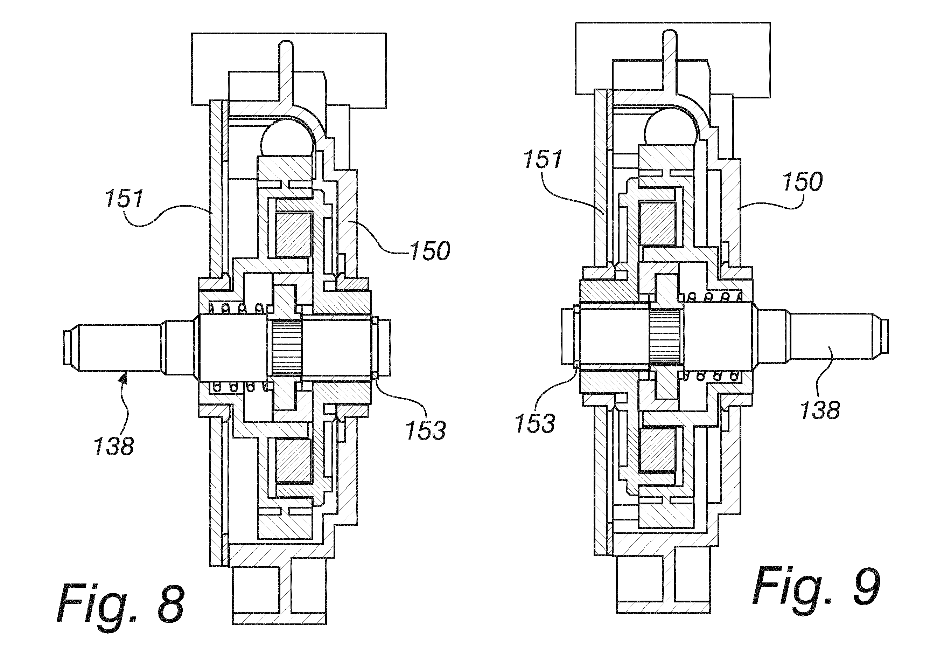

The gear 117, with the internally toothed ring 137 and the torque transmission shaft 138, is accommodatable in the housing 113 or in a first position, with the transmission shaft 138 protruding from the bottom 150 of the housing 113, as in Figure 9, or in a second, mirror-symmetrical position with the shaft 138 protruding from the cover 151, as in Figure 8.

An annular gasket is provided between the cover and the body of the housing.

Inside the gear 117, between the collar 146 and the internally toothed ring 137, a helical counterthrust spring 152 is provided, which is adapted to retain the internally toothed ring 137 in its seat.

Such spring can also not be present, and a rigid element can be in its place.

In such embodiment, the shaft 138 is locked by an elastic ring 153.

In practice it has been found that the invention fully achieves the intended aim and objects.

In particular, with the invention an electric gear motor is provided which is simple and cheap to make both with transmission of the torque on a first side, and with transmission of the torque on the opposite side, thanks to of the possibility of mounting the transmission means of motion in a same housing in two different ways, a first way in order to transmit the torque from a first side of the housing, and a second way in order to transmit the torque to the opposite, second side of the housing.

In this manner, with a single housing and with the same standardized gears which can be mounted in two different ways, the costs of production are reduced, and the stock of components is optimized.

Moreover, with the invention an electric gear motor is provided with efficiency and performance levels not lower than conventional gear motors.

Last but not least, with the invention an electric gear motor particularly for power window actuators and other applications is provided which can be made using known systems and technologies.

The invention, thus conceived, is susceptible of numerous modifications and variations, all of which are within the scope of the appended claims. Moreover, all the details may be substituted by other, technically equivalent elements.

In practice the materials employed, as well as the contingent dimensions and shapes, may be any according to requirements and to the state of the art.

The disclosures in Italian Patent Application No. PD2011A000213 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. An electric gear motor (10) particularly for power window actuators and other similar applications, of the type comprising an electric motor (11) to the casing (12) of which a gear holder housing (13) is fixed, the end portion of the rotating shaft of said electric motor (11) meshing with torque transmission means (14) which are adapted to transfer the rotation from a first axis (X1), i.e., the axis of said rotating shaft, to a second axis (X2), which is perpendicular to a plane that comprises said first axis (X1), said torque transmission means (14) being accommodated in said housing (13), said electric gear motor (10) being **characterized in that** said housing (13) and said torque transmission means (14) are shaped so that said torque transmission means (14) can be mounted in said housing (13), selectively, according to either a first type of assembly, intended to allow the transmission of torque on a first side (15) of the housing (13), or a second type of assembly, intended to allow the transmission of torque on the opposite, second side (16) of the housing (13).

2. The electric gear motor according to claim 1, **characterized in that** said torque transmission means (14) comprise, inside said housing (13), a driven gear (17), which is supported perimetrically by two opposite sliding collars (18, 19), a first collar (18) interposed between a first face of the perimetric portion (20) of said driven gear (17) and the edge (21) of a first axial opening (22) on said housing (13), which is adapted to allow access to the central portion (23) of said driven gear (17), the second sliding collar (19) being interposed between the opposite, second face of the perimetric portion (20) of the driven gear (17) and the edge (24) of a second axial opening (25), which is opposite to the first one (22) and is defined on a cover (26) of the housing (13), for containing said driven gear (17), said transmission means (14) comprising furthermore a flange (27) which supports a supporting shaft (28) for said driven gear (17), said shaft (28) being adapted to arrange itself so as to pass axially through said driven gear (17) and to protrude from it by such a length as to also support a component of a drive of a power window actuator or the like, said flange (27) being fixable by quick fixing means to either one of the edges (21, 24) of said openings (22, 25) of said housing (13).

3. The gear motor according to the preceding claims, **characterized in that** said quick fixing means are constituted by a series of spaced snap-acting interlocking tabs (29, 30, 31), which are elastically flexible and are provided with corresponding teeth (32) adapted to engage in undercut with respect to the edges (21, 24) either of said first opening (22) on said housing (13) or of the second opening (25) on said cover (26).

4. The gear motor according to the preceding claims, **characterized in that** said flange (27) is provided by molding plastic material and in particular is overmolded onto an end of said supporting shaft (28).

5. The gear motor according to the preceding claims, **characterized in that** said sliding collars (18, 19) are provided with receptacles (33, 34, 35) for accommodating said interlocking tabs (29, 30, 31).

6. The gear motor according to claim 1, **characterized in that** said torque transmission means (114) comprise, within said housing (113), a driven gear (117), which supports an internally toothed ring (137) for mating in an axial direction with a torque transmission shaft (138).

7. The gear motor according to the preceding claim, **characterized in that** said internally toothed ring (137) is mounted in a corresponding seat (139) defined on a sleeve (140) which is partially inserted in said gear (117) and is coupled thereto by a flange thereof (141) which is provided with protrusions (142) which are contoured to be inserted in corresponding seats (143) defined on said gear, with the interposition of an annular body (144) for cushioning stresses in a tangential direction between the gear (117) and the flange (141) of the sleeve (140).

8. The gear motor according to the preceding claim, **characterized in that** the central portion (145) of said gear (117) and said sleeve (140) extend along the same orientation but in opposite directions so as to define respective pivoting cuffs (146, 147), said pivoting cuffs (146, 147) having the same outside diameter and being intended to rotate within corresponding identical collars (148, 149), a first collar (148) inserted in the bottom (150) of said housing (113), the second opposite collar (149) being incorporated in a cover (151) for closing said housing (113), said gear (117), with said internally toothed ring (137) and torque transmission shaft (138), being accommodatable within said housing (113) either in a first position, with the transmission shaft (138) protruding from said bottom (150) of the housing (113), or in a second, mirror-symmetrical position with the shaft (138) protruding from said cover (151).
